# DEMANDE DE BREVET EUROPEEN

(11) **EP 2 957 469 A1**
(43) Date de publication de la demande: **23.12.2015**
(21) Numéro de dépôt: 15172090.1
(22) Date de dépôt: 15.06.2015
(51) Int. Cl.: B60S 1/34

(54) **ENSEMBLE D'ESSUYAGE D'UNE VITRE DE VÉHICULE AUTOMOBILE COMPORTANT UNE TÊTE DE MONTAGE ET UN BRAS D'ENTRAÎNEMENT**

(30) Priorité: 20.06.2014 FR 1455678
(71) Demandeur: Valeo Systèmes d'Essuyage, 78321 Le Mesnil Saint Denis (FR)
(72) Inventeur: Garibaldi, Vincent, 63500 ISSOIRE (FR); Kuchly, Nicolas, 63500 Issoire (FR)
(74) Mandataire: Callu Danseux, Violaine

(57) **Abrégé**

L'invention concerne un ensemble d'essuyage d'une vitre de véhicule automobile, comportant une tête de montage (2) apte à être entraînée en rotation par un arbre motorisé autour d'un axe transversal de la tête de montage, et un bras d'entraînement (4) qui s'étend selon un axe longitudinal entre une extrémité proximale (42) apte à être montée à pivotement autour d'un axe porté par ladite tête de montage et une extrémité distale (44) opposée apte à porter un balai d'essuyage, des moyens élastiques de rappel (90) étant prévus pour participer au maintien en position du bras par rapport à la tête de montage.

Selon l'invention, le bras d'entraînement comporte un carénage (55) disposé à son extrémité proximale et qui entoure intégralement la tête de montage, ledit carénage présentant sur sa face interne des moyens en saillie (70, 74, 80, 82) coopérants avec des moyens complémentaires (16, 18, 30, 38, 40) en saillie de la face externe de la tête de montage pour former d'une part des moyens de pivotement (16, 74) du bras autour de la tête et d'autre part des moyens de maintien en position du bras par rapport à la tête selon différentes positions fonctionnelles de l'ensemble d'essuyage.

## Description

La présente invention concerne un ensemble d'essuyage de vitre de véhicule automobile comportant une tête de montage apte à être entraîné en rotation par un arbre d'entraînement motorisé et un bras d'entraînement apte à porter à son extrémité opposée à la tête de montage un balai d'essuyage.

On connaît de tels modules qui équipent plus particulièrement les vitres arrière de véhicule automobile. La disposition du balai d'essuyage dans le prolongement axial du bras d'entraînement permet un nettoyage de la vitre sur une surface importante avec un unique ensemble d'essuyage. Ce type de structure présente toutefois l'inconvénient d'être fragile, notamment lorsque le balai d'essuyage doit déplacer une quantité de neige stagnante sur la vitre. Le couple qui en résulte peut être trop important pour la structure mécanique formée par le bras et par la tête de montage, et l'ensemble d'essuyage peut casser, notamment au niveau de la jonction entre la tête de montage et le bras d'entraînement.

La présente invention s'inscrit dans ce contexte et vise à proposer un ensemble d'essuyage, notamment pour une vitre arrière de véhicule automobile, suffisamment robuste.

Par ailleurs, de tels ensembles d'essuyage doivent être conçus pour prévoir un mécanisme de débrayage, permettant à l'utilisateur de simplifier le remplacement du balai d'essuyage lorsque celui-ci est usagé. L'utilisateur doit pouvoir faire pivoter le bras d'entraînement autour d'un axe d'articulation parallèle à la vitre et porté par la tête de montage, de manière à dégager le balai du contact de la vitre, et il est pratique pour l'utilisateur que la position de dégagement du balai, inclinée d'un certain angle, puisse être maintenu mécaniquement, pour que l'utilisateur puisse avoir ses mains libres pour réaliser le remplacement du balai.

Le système de débrayage doit être suffisamment sécurisé, c'est-à-dire permettre la levée du bras d'entraînement uniquement sous une certaine contrainte, pour éviter que le bras d'entraînement ne prenne une position de dégagement sans que cela soit voulu par l'utilisateur, et notamment lors du passage du véhicule dans un système de nettoyage à rouleaux, ce qui peut alors entraîner la casse ensemble d'essuyage si celui-ci se relève pendant le nettoyage.

L'invention, telle qu'elle a été inscrite dans le contexte d'obtention d'un ensemble d'essuyage suffisamment robuste, vise en outre à offrir une alternative au système débrayable qui soit efficace et sécurisé.

Ainsi, la présente invention propose un ensemble d'essuyage d'une vitre de véhicule automobile, comportant une tête de montage apte à être entraînée en rotation par un arbre motorisé autour d'un axe transversal de la tête de montage, et un bras d'entraînement qui s'étend selon un axe longitudinal entre une extrémité proximale apte à être montée à pivotement autour d'un axe porté par ladite tête de montage et une extrémité distale opposée apte à porter un balai d'essuyage, des moyens élastiques de rappel étant prévus pour participer au maintien en position du bras par rapport à la tête de montage.

Selon l'invention, le bras d'entraînement comporte un carénage disposé à son extrémité proximale et qui entoure intégralement la tête de montage, ledit carénage présentant sur sa face interne des moyens en saillie coopérants avec des moyens complémentaires en saillie de la face externe de la tête de montage pour former d'une part des moyens de pivotement du bras autour de la tête et d'autre part des moyens de maintien en position du bras par rapport à la tête selon différentes positions fonctionnelles de l'ensemble d'essuyage.

Selon différentes caractéristiques de l'invention, prises seules ou en combinaison :
- le carénage comporte au moins une portion d'extrémité arrière apte à loger la tête de montage et comportant des parois latérales en regard l'une de l'autre et une paroi transversale d'extrémité qui raccorde les parois latérales et qui présente une forme légèrement courbe pour entourer intégralement la tête de montage ;
- les parois latérales, à proximité de la paroi transversale d'extrémité, sont taillées en biais, de sorte que le bord inférieur de la portion d'extrémité arrière forme un biseau ;
- la face interne d'au moins une paroi latérale présente un dégagement concave usiné dans la matière depuis le bord supérieur de la portion d'extrémité arrière ;
- les moyens en saillie portés par le bras comportent une nervure axiale qui s'étend sous ledit dégagement jusqu'à la paroi inclinée formant le bord inférieur de la paroi latérale correspondante ;
- le carénage du bras d'entraînement présente différentes épaisseurs, de sorte qu'une zone arrière de réception de la tête, de moindre épaisseur, et une zone avant de transfert d'effort, de plus forte épaisseur, sont séparées par des lignes de jonction formant épaulement en regard l'une de l'autre ;
- chaque ligne de jonction présente un profil spécifique dans lequel une portée cylindrique forme partie desdits moyens de pivotement, et dans lequel une portion droite s'étendant au droit de la portée cylindrique forme partie des moyens de maintien en position ;
- les moyens complémentaires portés par la tête de montage pour former lesdits moyens de pivotement consistent en des portions de cylindre disposées latéralement de part et d'autre de la tête pour être logées respectivement dans une des portées cylindriques ;
- la portée cylindrique présente des parois droites de guidage, en regard l'une de l'autre, et une paroi de butée circulaire qui les raccordent en formant un demi-cercle ouvert vers la zone arrière de réception de la tête;
- les moyens élastiques de rappel consistent en un ressort hélicoïdal monté à une première extrémité sur la tête de montage et dont la deuxième extrémité est montée sur le bras d'entraînement ;
- les spires d'extrémité du ressort hélicoïdal sont prolongées parallèlement à la ligne d'action du ressort par une branche à l'extrémité libre de laquelle des moyens de fixation sont formés pour l'accrochage à la tête de montage et au bras, lesdites branches étant droites ;
- la tête de montage comporte un corps percé d'un alésage coopérant avec l'arbre motorisé et une patte creusée axialement entre deux montants latéraux pour laisser passage au ressort, un axe d'accrochage qui s'étend en

travers de la patte entre les deux montants latéraux étant prévu pour l'accrochage du ressort ;
- une surépaisseur de la face externe des montants latéraux de ladite patte et la face interne des parois latérales du bras qui s'étendent en regard forment parties des moyens de maintien en position du bras par rapport à la tête ;
- le carénage du bras et la tête de montage portent en outre des moyens complémentaires pour le débrayage du bras, lesdits moyens comportant notamment une rampe venue de matière avec la face interne du bras et des moyens de guidage portés par la tête de montage ;
- la rampe présente deux plans d'inclinaisons différentes, un premier plan incliné, présentant une première valeur d'inclinaison, étant formé depuis le bord supérieur du bras, et un deuxième plan incliné, présentant une deuxième valeur d'inclinaison moins importante que la première valeur d'inclinaison, prolongeant le premier plan incliné ;
- la tête de montage et le bras de raccordement sont agencés dans une position dite de fonctionnement de telle sorte que l'axe transversal de la tête de montage et l'axe longitudinal du bras sont sensiblement perpendiculaires ;
- le bras est apte à prendre une position de débrayage stable dans laquelle l'axe longitudinal du bras est décalé angulairement d'un angle inférieur ou égal à 30° par rapport à l'axe transversal de la tête de montage.

D'autres caractéristiques et avantages de l'invention apparaîtront à la lecture de la description détaillée d'un mode de réalisation qui va suivre et pour la compréhension de laquelle on se reportera aux dessins annexés parmi lesquels :
- les figures 1 à 5 sont des vues respectivement de face, de côté, de dessus, de dessous et en perspective d'une tête de montage d'un ensemble d'essuyage selon un premier mode de réalisation de l'invention ;
- la figure 6 est une vue en perspective du bras d'entrainement apte à être monté, dans l'ensemble d'essuyage selon le premier mode de réalisation de l'invention, sur la tête de montage illustrée sur les figures précédentes, ladite figure rendant particulièrement visible une partie d'extrémité proximale par l'intermédiaire de laquelle le bras est apte à coopérer avec la tête de montage et une partie d'extrémité distale sur laquelle le balai d'essuyage est rapporté ;

- la figure 7 est une vue de côté, en coupe, de ladite partie d'extrémité proximale du bras de la figure 6 ;
- la figure 8 est un vue de détail, en perspective de la partie d'extrémité proximale du bras avec un capot ;
- les figures 9 et 10 sont des vues de l'ensemble d'essuyage lorsque la tête et le bras sont assemblés dans une position de l'invention dite de livraison, la figure 9 étant vue de dessous tandis que la figure 10 est vue de côté, en coupe longitudinale centrée sur des moyens d'articulation du bras et de la tête ;
- la figure 11 est une vue de côté de l'ensemble d'essuyage lorsque la tête et le bras sont assemblés dans une position de fonctionnement, le bras étant ici représenté en coupe pour plus de visibilité ;
- les figures 12 et 13 sont des vues de l'ensemble d'essuyage lorsque la tête et le bras sont assemblés dans une position de l'invention dite de débrayage intermédiaire, la figure 12 étant une vue de côté similaire à celle de la figure 11 tandis que la figure 13 est vue de côté, en coupe longitudinale centrée sur des moyens d'articulation du bras et de la téte ;
- et les figures 14 et 15 sont des vues de l'ensemble d'essuyage lorsque la tête et le bras sont assemblés dans une position de l'invention dite de débrayage stable, la figure 14 étant une vue de côté similaire à celle de la figure 12 tandis que la figure 15 est vue de côté, en coupe longitudinale centrée sur des moyens d'articulation du bras et de la tête.

Tel qu'illustré sur les figures, l'ensemble d'essuyage comporte une tête de montage 2, un bras d'entraînement 4 coopérant avec ladite tête, et un balai d'essuyage, ici non représenté et qui est monté sur le bras à l'opposé de la tête de montage.

La tête de montage est rendue solidaire d'un arbre moteur, ici non représenté et qui s'étend sensiblement perpendiculairement à la vitre à essuyer, de manière à imprimer à cette tête de montage et à l'ensemble d'essuyage correspondant un mouvement de rotation alternatif.

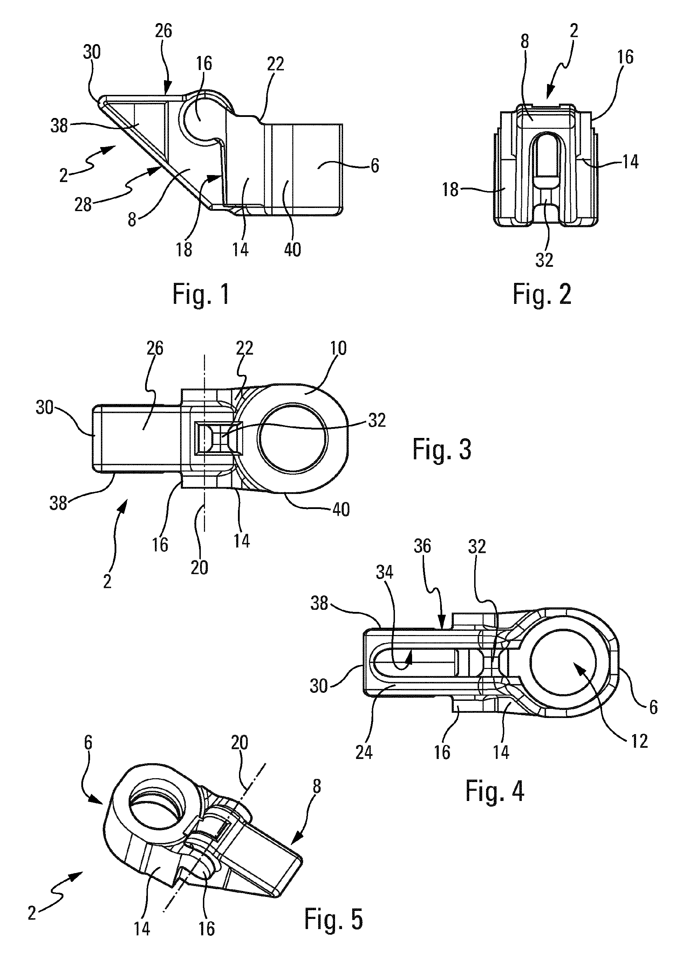

La tête de montage 2, illustrée seule sur les figures 1 à 5, est formée d'une pièce monobloc comportant une base 6, au niveau de laquelle notamment la tête est rendue solidaire en rotation de l'arbre moteur, et une patte de raccordement 8 au bras d'entraînement, qui s'étend sensiblement perpendiculairement à ladite base. La surface extérieure de la tête de montage comporte des godrons aptes à coopérer, tel que cela sera décrit ci-après, avec des nervures formées à l'intérieur du bras d'entrainement, ces moyens complémentaires en saillie d'une part du bras et d'autre part de la tête étant agencés pour faciliter le maintien en position du bras par rapport à la tête et le transfert de charge entre ces deux composants de l'ensemble d'essuyage.

La base présente un corps sensiblement cylindrique 10 percé en son centre par un alésage traversant 12, et deux jambes 14 disposées en regard l'une de l'autre de manière à prolonger radialement ledit corps et à entourer la patte de raccordement.

L'axe de l'alésage traversant est confondu avec l'axe de rotation de l'arbre motorisé. On appellera cet axe l'axe transversal de la tête de montage, et l'on comprendra qu'il correspond à l'axe de rotation de l'ensemble d'essuyage. L'alésage traversant présente un diamètre sensiblement équivalent au diamètre extérieur de l'arbre motorisé, ainsi que des moyens d'emmanchement, par exemple une forme conique, pour coopérer avec des moyens complémentaires portés par l'arbre motorisé, de manière à assurer l'entraînement en rotation de la tête de montage par l'arbre.

Chaque jambe 14 présente une portion de cylindre 16 d'axe perpendiculaire à l'axe transversal de la tête de montage, dégagée de la jambe par un évidement de matière sous la portion de cylindre qui forme une portion de butée à bord droit 18. Ces deux portions de cylindre portées par la tête de montage présentent un axe commun 20 qui forme tel que cela sera décrit ci-après un axe de pivotement du bras de raccordement par rapport à la tête de montage.

La patte de raccordement 8 est formée dans la continuité du corps cylindrique, et elle est centrée entre les deux jambes 14, de sorte que le corps cylindrique présente une dimension transversale plus grande que la patte. Un évidement de matière 22 est réalisé sur la face supérieure du corps cylindrique, en retrait des portions de cylindre 16, pour former une face d'appui pour les moyens de vissage de la tête de montage avec l'arbre motorisé.

La patte de raccordement 8 prolonge ainsi radialement la base, selon un premier axe. La patte comporte deux montants latéraux 24 qui s'étendent en regard l'un de l'autre, en se raccordant perpendiculairement à la surface externe de la base cylindrique, et elle comporte en outre une paroi supérieure 26 qui couvre les deux montants. Les montants latéraux sont venus de matière avec les portions de cylindre qui dépassent en saillie latérale des faces externes des montants latéraux. Chaque montant latéral présente une forme plane sensiblement triangulaire, dont un premier côté est venu de matière avec la base de la tête, un deuxième côté est solidaire de la paroi supérieure et un troisième côté, la face avant 28 des montants latéraux, est incliné d'un angle sensiblement égal à 45° par rapport au premier axe. Un bord arrondi 30 est formé à la liaison de chacun des montants latéraux avec la paroi supérieure.

Tel que cela est illustré et notamment visible sur les figures 2 et 4, la patte possède une forme creuse laissant passage, entre les montants latéraux et sous la paroi supérieure, pour un ressort tel qu'il sera décrit plus tard. La patte comporte un axe d'accrochage 32 d'une extrémité de ce ressort, l'axe d'accrochage étant disposé transversalement entre les faces internes 34 des montants latéraux 24, à l'intérieur de la patte.

On définit les faces internes 34 des montants latéraux comme celles étant tournées en regard l'une de l'autre, et les faces externes 36 de ces montants latéraux étant les faces opposées, aptes à être en regard du bras lorsque la tête de montage coopère avec les bras d'entraînement.

Les moyens en saillie de maintien en position et de transfert de charge portés par la tête de montage comportent d'une part des premiers godrons 38 formés par une surépaisseur de la face externe de chaque montant latéral de la patte, et ils comportent d'autre part des deuxièmes godrons 40 qui sont formés sur la surface externe du corps cylindrique, et qui s'étendent parallèlement à l'axe transversal de la tête de montage. Par ailleurs, des troisièmes godrons s'étendent parallèlement à ce même axe de rotation sous chacune des portions de cylindre de la base, formé par la portion de butée à bord droit 18.

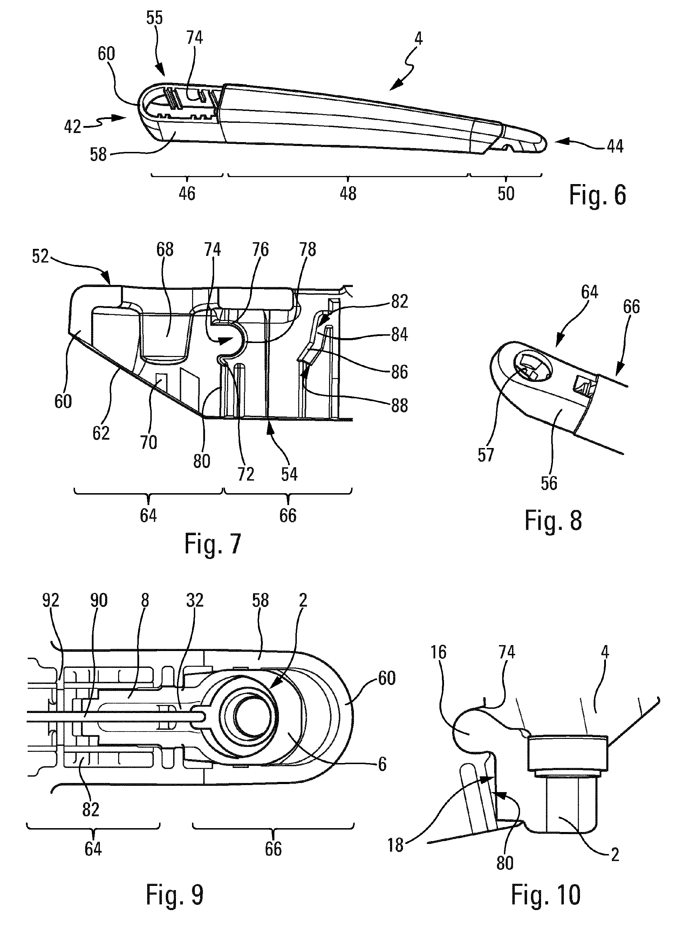

Le bras d'entraînement 4, illustré seul sur les figures 6 à 8, présente une forme allongé qui s'étend sensiblement longitudinalement, selon un axe longitudinal du bras, entre une extrémité proximale 42 coopérant avec la tête de montage et une extrémité distale 44 apte à porter un balai d'essuyage, ici non représenté. De l'extrémité proximale à l'extrémité distale, le bras comporte successivement une portion d'extrémité arrière 46, apte à entourer la tête de montage, une portion centrale 48 et une portion d'extrémité avant 50, porteuse du balai d'essuyage, ladite portion centrale raccordant la portion d'extrémité arrière à la portion d'extrémité avant. Pour la suite, on définit le bord inférieur 52 du bras comme le bord apte à être tourné vers la vitre à essuyer lorsque l'ensemble d'essuyage est en position sur le véhicule, et on définit un bord supérieur 54 opposé. Et l'on définit un axe transversal du bras comme un axe perpendiculaire à ces bords inférieur et supérieur, et à l'axe longitudinal du bras d'entraînement.

La portion d'extrémité arrière 46 comporte un carénage 55 solidaire de la portion centrale et un capot 56 apte à venir en recouvrement du bord supérieur du carénage et comportant au moins un trou 57 pour permettre l'accès au carénage lorsque le capot est en position.

Le carénage comporte deux parois latérales 58 raccordées à l'arrière du carénage par une paroi transversale d'extrémité 60, légèrement courbée. Les parois latérales, à proximité de la paroi transversale d'extrémité, sont taillées en biais, de sorte que le bord inférieur du carénage forme un biseau 62.

Le carénage définit une zone arrière de réception 64, de moindre épaisseur, et une zone avant de transfert d'effort 66, de plus forte épaisseur.

Dans la zone arrière de réception 64, chaque paroi latérale présente, du bord supérieur au bord inférieur opposé, un dégagement concave 68 usiné dans la matière, et une nervure axiale 70, qui s'étend sous ce dégagement jusqu'à la paroi inclinée formant le bord inférieur de la paroi latérale.

Sur chaque paroi latérale, la jonction entre la zone arrière de réception et la zone avant de transfert d'effort, pour lesquelles la paroi latérale présente des épaisseurs différentes, consiste en un bord formant épaulement 72 et la jonction présente un profil spécifique dans sa partie supérieure de manière à ce que le bord y forme une portée cylindrique 74. Cette portée cylindrique présente des parois droites de guidage 76, en regard l'une de l'autre et qui s'étendent sensiblement selon l'axe longitudinal du bras, et une paroi de butée circulaire 78 qui les raccordent en formant un demi-cercle ouvert vers l'extrémité proximale du bras. Tel qu'illustré sur les figures, la paroi droite de guidage inférieure de la portée cylindrique est prolongée perpendiculairement par la partie inférieure de l'épaulement qui est une portion droite 80.

Dans la zone avant de transfert d'effort 66, chaque paroi latérale porte une nervure qui s'étend en saillie vers l'intérieur du bras en formant une rampe 82. Avantageusement, la rampe présente deux plans d'inclinaisons différentes par rapport à l'axe longitudinal du bras. Un premier plan incliné 84, présentant une première valeur d'inclinaison, est formé depuis le bord supérieur du bras, et un deuxième plan incliné 86, présentant une deuxième valeur d'inclinaison, prolonge le premier plan incliné. Le premier plan incliné s'étend au-dessus du deuxième plan incliné, de manière à former une rampe depuis le bord supérieur du bras jusqu'à mi-hauteur de celui-ci. La première valeur d'inclinaison est plus forte que la deuxième valeur d'inclinaison, et l'on pourra prévoir à titre d'exemple une première valeur d'inclinaison sensiblement égale à 80° et une deuxième valeur d'inclinaison sensiblement égale à 45°.

Avantageusement, l'extrémité inférieure 88 de la rampe 82 est taillée de manière à ce que la face d'extrémité présente un angle, avec la face du deuxième plan incliné tournée vers l'arrière du bras, supérieur à 90°. L'avantage d'une telle orientation sera décrit plus en détail dans la description fonctionnelle de l'ensemble d'essuyage.

On observe que dans l'axe longitudinal du bras, dans le sens allant de l'extrémité proximale à l'extrémité distale, on a disposé successivement dans le carénage une portion de réception de la tête, la portée cylindrique et la nervure axiale, et enfin la rampe.

L'ensemble d'essuyage comporte également, outre le bras et la tête, un ressort hélicoïdal 90, qui est monté sur l'axe d'accrochage à une première extrémité et dont la deuxième extrémité est montée sur le bras, et un balai d'essuyage, non représenté ici, monté de façon classique à l'extrémité distale du bras.

La portion centrale du bras 48 comporte différentes nervures de rigidification 92 parmi lesquelles l'une est munie d'un orifice de réception de la deuxième extrémité du ressort. Les autres nervures s'étendent en travers du bras, mais on comprend que leur hauteur permet d'assurer qu'elles ne gênent pas le passage du ressort.

Le ressort 90 est un ressort hélicoïdal, dont les spires d'extrémités sont prolongées parallèlement à la ligne d'action du ressort par une branche 94 à l'extrémité libre de laquelle des moyens de fixation sont formés pour l'accrochage à la tête de montage et au bras. Les moyens de fixation disposés pour l'accrochage au bras présentent une forme adaptée à coopérer avec l'orifice de réception ménagé dans l'une des nervures de la portion centrale du bras, tandis que les moyens de fixation disposés pour l'accrochage à la tête de montage prennent la forme d'une boucle 96 qui présente une forme en C, de sorte que cette forme de demi-cercle puisse venir en prise autour de l'axe d'accrochage 32 logé dans la patte de la tête de montage.

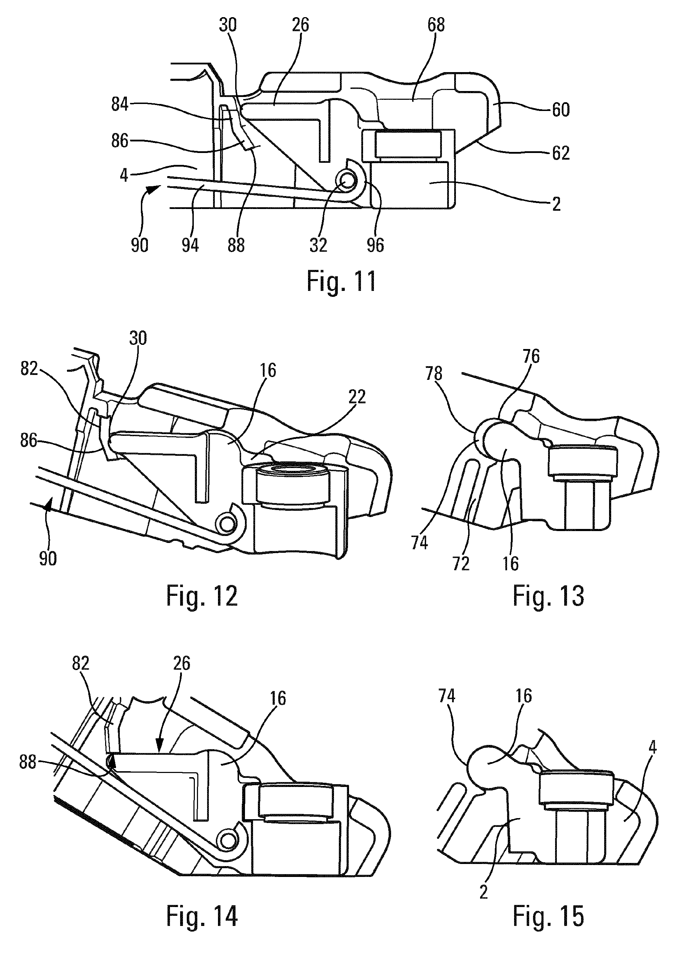

On va maintenant décrire la coopération du bras et de la tête de montage dans différentes positions fonctionnelles permises par l'ensemble d'essuyage selon l'invention. Ces différentes positions sont une position de livraison, visible sur les figures 9 et 10, une position de fonctionnement, visible sur la figure 11, une position de débrayage intermédiaire, visible sur les figures 12 et 13, et une position de débrayage stable, visible sur les figures 14 et 15.

Dans chacune de ces positions, on peut observer d'une part que la base 6 de la tête est logée dans la zone arrière de réception 64, de moindre épaisseur, et que la tête est ainsi protégée par les parois latérales 58 et par la paroi transversale d'extrémité 60 qui l'entourent, et d'autre part que la patte 8 s'étend dans la zone avant de transfert d'effort 66 du bras, de plus forte épaisseur.

Par ailleurs, dans chacune de ces positions, les portions de cylindre 16 disposées en saillie de la tête de montage coopèrent avec les portées cylindriques 74 formées sur les surfaces internes du bras, en définissant ainsi un axe de pivotement du bras par rapport à la tête de montage par la relation cylindre/cylindre. Des arrêts axiaux sont formés selon une direction par les parois latérales 58 du bras, selon une autre direction par les parois droites de guidage 76 de la portée cylindrique, et selon une dernière direction par le bord de butée circulaire 78 de la portée cylindrique et l'action du ressort 90. Tel que cela sera décrit ci-après, selon certaines positions de l'ensemble d'essuyage, les portions de cylindre 16 peuvent glisser dans les portées cylindriques correspondantes 74 mais les deux éléments restent malgré tout en contact pour revenir ensuite en position.

La position de livraison est illustrée sur les figures 9 et 10. Le ressort 90 est monté entre les deux axes d'accrochage, le premier porté par la portion centrale du bras d'entraînement et le second 32 porté par la patte 8 de la tête de montage. Le bras est disposé autour de la tête de montage, de sorte que le bord arrondi 30 de l'extrémité avant de la patte est au contact avec le bord supérieur de la rampe 82. Dans cette position, l'axe transversal du bras d'entraînement et l'axe transversal de la tête de montage ne sont pas parallèles, de sorte que l'axe transversal du bras d'entraînement fait un angle négatif avec l'axe transversal de la tête de montage. Le plan incliné de la rampe et l'effort du ressort hélicoïdal empêche la rotation de la tête de montage pour que celle-ci rentre vers l'intérieur du bras. Une butée est prévue pour empêcher la rotation de la tête en sens inverse, ici dans le sens des aiguilles d'une montre sur l'illustration de la figure 10. Cette butée est réalisée par le contact du troisième godron, c'est-à-dire la portion de butée à bord droit 18 de la tête de montage, contre la portion droite de l'épaulement 80 formé sur le bras à la jonction entre la zone arrière de réception 64 et la zone avant de transfert d'effort 66. Ainsi, sous l'action du ressort, qui tend à plaquer le bord droit contre l'épaulement, la position de livraison est stable. Cela permet que la tête ne se désengage pas du bras lors du transport.

La position de fonctionnement est illustrée sur la figure 11. Le bras d'entraînement s'étend selon un axe sensiblement perpendiculaire à l'axe de l'alésage de la tête de montage et donc à l'axe de l'arbre motorisé. Le bord arrondi 30 de l'extrémité avant de la patte est au contact du premier plan incliné 84 de la rampe, et dans cette zone de la patte, les premiers godrons 38 en surépaisseur des montants latéraux 24 de la patte sont disposés contre la face interne des parois latérales du bras. Par ailleurs les deuxièmes godrons 40 portés par le corps de la tête sont au contact des nervures axiales 70 disposées dans la zone arrière de réception du bras. L'interaction des godrons portés par la tête et des nervures portées par la tête assure le contact entre les deux composants de l'ensemble d'essuyage, et ils limitent le mouvement latéral de la tête à l'intérieur du bras, facilitant ainsi le maintien en position des composants de l'ensemble d'essuyage et le transfert d'effort lors du fonctionnement de cet ensemble entre le bras et la tête.

La position de débrayage intermédiaire est illustrée sur les figures 12 et 13. Elle correspond à une position intermédiaire entre la position de fonctionnement et la position de débrayage stable. Dans la position intermédiaire illustrée, le bras d'entraînement s'étend selon un axe qui fait un angle positif d'environ 15° avec la perpendiculaire à l'axe de l'alésage de la tête de montage. L'utilisateur tient le bras ou le balai d'essuyage et il procède à un effort de soulèvement de ceux-ci par rapport à la tête de montage, de sorte que le bras pivote autour de l'axe défini par la portée cylindrique du bras. Dans cette position, le bord arrondi 30 de l'extrémité de la patte est au contact du deuxième plan incliné 86 de la rampe et chaque portion de cylindre 16 se dégage de la portée cylindrique 74, à distance de la paroi de butée circulaire 78 tout en restant au contact des parois de guidage droites 76.

La position de débrayage stable est illustrée sur les figures 14 et 15. Elle correspond à la position dans laquelle l'utilisateur peut lâcher le bras ou le balai d'essuyage pour procéder au remplacement du balai usagé. Dans la position stable illustrée, le bras d'entraînement s'étend selon un axe qui fait un angle d'environ 30° avec la perpendiculaire à l'axe de l'alésage de la tête de montage. La position de débrayage stable est obtenue par le contact entre la paroi supérieure 26 de la patte et l'extrémité inférieure 88 de la rampe 82 alors que le ressort 90 tend à ramener le bras dans la position de fonctionnement. Dans cette position, on observe que chaque portion de cylindre 16 est au contact de la paroi de butée 78 de la portée cylindrique 74. Par ailleurs, le biseau 62 de la portion d'extrémité arrière forme une butée franche contre l'ensemble structurel porteur du moteur d'entraînement de la tête de montage, de manière à éviter le surdébrayage, c'est-à-dire dans ce cas un débrayage supérieur à 30°. Le bras d'entraînement peut pivoter autour de la tête de montage et prendre cette position de débrayage stable grâce aux dégagements concaves 68 usinés dans les parois latérales du bras, dans la portion d'extrémité arrière, qui laissent passage au bras sans que celui-ci n'entre en contact avec la tête de montage.

On passe de la position de livraison à la position de fonctionnement en fixant la tête de montage 2 sur l'arbre motorisé s'étendant perpendiculairement à la vitre. A cet effet, on passe une tête de visseuse à travers le trou 57 formé dans le capot 56 recouvrant le bras, pour que celle-ci accède à des moyens de vissage aptes à solidariser l'arbre motorisé à la tête de montage. Les dégagements concaves 68 formés dans les parois latérales du carénage du bras permettent le passage de cette tête de visseuse, ainsi que les évidements de matière 22 formés sur la base de la tête de montage. Le balai d'essuyage est plaqué contre la vitre et le bras d'entraînement prend, du fait de l'effort en réaction du contact de la vitre, une position sensiblement perpendiculaire à l'axe de l'alésage de la tête de montage et à l'axe moteur. Le ressort 90 est légèrement compressé et fournit un effort en retour qui tend à plaquer le balai contre la vitre.

On passe de la position de fonctionnement à la position de débrayage intermédiaire décrite précédemment, en soulevant le bras d'entrainement, de manière à le faire pivoter autour de l'axe défini par la portée cylindrique 74 du bras et les portions de cylindre 16 de la tête de montage. On contraint le ressort hélicoïdal 90, ce qui nécessite un effort certain pour soulever suffisamment le bras d'entrainement 4. On comprend que cet effort suffisant à fournir, s'il est calibré pour pouvoir être réalisé aisément par n'importe quel utilisateur du véhicule, permet d'éviter un soulèvement intempestif du bras et du balai dans des cas non souhaités, par exemple sous l'effet du vent, ou sous l'action d'un rouleau de nettoyage de véhicule. La présence du deuxième plan incliné 86 de la rampe, dont l'inclinaison est moins importante que celle du premier plan incliné 84, et qui génère de la sorte un effort plus important à fournir pour déplacer le bord arrondi 30 de la patte 8 de la tête de montage le long de cette pente, peut suffire à éviter que le bras ne se soulève dans de grandes proportions lorsque le soulèvement est intempestif.

On passe de la position de débrayage intermédiaire illustrée à la position de débrayage stable en continuant à faire pivoter le bras d'entraînement par rapport à la tête de montage qui reste fixe, solidaire de l'arbre motorisé. La présence du deuxième plan incliné 86 de la rampe, dont l'inclinaison est moins importante que celle du premier plan incliné 84, impose, afin de débrayer le bras, de fournir un effort supplémentaire pour contraindre le ressort hélicoïdal. La dureté du ressort 90 génère un mouvement de translation relatif entre la tête de montage et le bras. Alors que la tête reste fixe, le bras avance par effet de coin dans le sens de l'éloignement de la tête, sensiblement dans la direction définie par la forme du bras dans la position de débrayage intermédiaire. Les portions de cylindre 16 portées par la tête reculent ainsi dans les portées cylindriques 74 du bras, c'est-à-dire qu'elles ne sont plus au contact de la paroi de butée circulaire 78, mais restent en prise dans les parois droites 76 de ces portées cylindriques. Ce mouvement de translation entre le bras et la tête dans le sens de leur éloignement se continue d'une part si l'utilisateur continue à produire un effort suffisant, et d'autre part jusqu'à ce que le bord arrondi 30 de la patte aille au-delà de l'extrémité inférieure de la rampe.

Une fois que le bord arrondi a passé cette extrémité inférieure et qu'il n'est plus au contact de la rampe, le bras est rappelé par l'effet du relâchement du ressort de sorte qu'il se produit un mouvement de translation inverse entre le bras et la tête, dans le sens du rapprochement l'un de l'autre, les portions de cylindre 16 se remettant en butée contre les parois de butée 78 des portées cylindriques 74. La butée franche formée par le contact du biseau du bras sur le bloc moteur stoppe l'utilisateur dans son action de soulèvement du bras et il peut relâcher le bras. La paroi supérieure 26 de la patte, qui est passée sous l'extrémité inférieure 88 de la rampe lors du rapprochement du bras et de la tête, forme une butée verticale au retour en position du bras dans sa position de fonctionnement, l'extrémité inférieure de la rampe formée sur le bras venant au contact de la paroi supérieure de la patte de la tête de montage.

Enfin, on revient à la position de fonctionnement, lorsque le balai est remplacé, en appuyant sur le bras de manière à forcer son pivotement par rapport à la tête dans le sens inverse de celui effectué dans les étapes précédentes. L'inclinaison de l'extrémité inférieure 88 de la rampe peut être calculée pour que dans la position de débrayage stable, la surface de contact entre la rampe 82 et la patte 8 soit limitée au maximum, de manière à ce que le glissement de la rampe le long de la paroi supérieure de la patte soit facilité. Par ailleurs, il est intéressant que la zone de contact entre la paroi supérieure et la rampe soit disposée le plus proche possible du bord arrondi 30 de la patte. Sous l'effet de la pression verticale sur le bras, le bras se déplace en translation par rapport à la tête, la rampe glissant le long de la paroi supérieure jusqu'à ce que celle-ci n'offre plus de butée et permette le retour progressif du bras à la position de fonctionnement, le bord arrondi de la patte restant au contact de la rampe pendant ce retour en position. Là encore, pour permettre le mouvement en translation de la tête par rapport au bras, les portions de cylindre 16 se sont déplacées dans les portées cylindrique 74. L'utilisateur peut pousser le bras jusqu'à ce que le balai d'essuyage rencontre la vitre, dans la position de fonctionnement de l'ensemble d'essuyage.

La description qui précède explique clairement comment l'invention permet d'atteindre les objectifs qu'elle s'est fixés et notamment de proposer un ensemble d'essuyage qui soit particulièrement rigide, assurant une transmission d'efforts efficace entre la tête de montage et le bras d'entraînement.

On propose un bras d'entraînement qui permet un capotage de la tête de montage, ce capotage intégrant en outre des moyens coopérants avec cette tête de montage pour former un ensemble d'essuyage robuste. On permet ensuite, par ces moyens coopérants, de proposer une fonction de débrayage stable permettant le remplacement facilité du balai d'essuyage, et ceci à un angle relativement faible comparé aux ensembles de l'état de la technique. Avantageusement, le blocage se fait à environ 30°. L'ensemble d'essuyage s'étend donc moins haut dans cette position de débrayage stable, et il est donc plus résistant si un effort est porté sur le balai et le bras d'entraînement.

Le débrayage stable est fonction de la forme et de la longueur de la rampe 82, et est obtenu par le contact entre la paroi supérieure 26 de la patte 8 et l'extrémité inférieure 88 de la rampe 82. Contrairement aux solutions de l'art antérieur, il n'est plus nécessaire que la ligne d'action de rotation du ressort passe au-delà de l'axe de pivotement 20 du bras de raccordement 4 par rapport à la tête de montage 2 pour obtenir cette position de débrayage stable.

Bien entendu, diverses modifications peuvent être apportées par l'homme du métier aux structures de l'ensemble d'essuyage, qui viennent d'être décrites à titre d'exemples non limitatifs, notamment dans la forme des moyens coopérants du bras et de la tête dès lors qu'ils permettent de proposer un ensemble d'essuyage robuste, dans un contexte de bras capoté entourant intégralement la tête de montage et porteur sur sa face interne de moyens facilitant le transfert d'effort avec la tête et de moyens facilitant l'obtention d'une position de débrayage stable.

## Revendications

1. Ensemble d'essuyage d'une vitre de véhicule automobile, comportant une tête de montage (2) apte à être entraînée en rotation par un arbre motorisé autour d'un axe transversal de la tête de montage, et un bras d'entraînement (4) qui s'étend selon un axe longitudinal entre une extrémité proximale (42) apte à être montée à pivotement autour d'un axe porté par ladite tête de montage et une extrémité distale (44) opposée apte à porter un balai d'essuyage, des moyens élastiques de rappel (90) étant prévus pour participer au maintien en position du bras par rapport à la tête de montage, **caractérisé en ce que** le bras d'entraînement comporte un carénage (55) disposé à son extrémité proximale et qui entoure intégralement la tête de montage, ledit carénage présentant sur sa face interne des moyens en saillie (70, 74, 80, 82) coopérants avec des moyens complémentaires (16, 18, 30, 38, 40) en saillie de la face externe de la tête de montage pour former d'une part des moyens de pivotement (16, 74) du bras autour de la tête et d'autre part des moyens de maintien en position du bras par rapport à la tête selon différentes positions fonctionnelles de l'ensemble d'essuyage.

2. Ensemble d'essuyage selon la revendication 1, **caractérisé en ce que** le carénage (55) comporte au moins des parois latérales (58) en regard l'une de l'autre et une paroi transversale d'extrémité (60) qui raccorde les parois latérales et qui présente une forme légèrement courbe pour entourer intégralement la tête de montage (2).

3. Ensemble d'essuyage selon la revendication 2, **caractérisé en ce que** les parois latérales (58), à proximité de la paroi transversale d'extrémité (60), sont taillées en biais, de sorte que le bord inférieur de la portion d'extrémité arrière forme un biseau (62).

4. Ensemble d'essuyage selon la revendication 2 ou 3, **caractérisé en ce que** la face interne d'au moins une paroi latérale (58) présente un dégagement concave (68) usiné dans la matière depuis le bord supérieur du carénage (55).

5. Ensemble d'essuyage selon la revendication 4, **caractérisé en ce que** les moyens en saillie portés par le bras d'entraînement (4) comportent une nervure axiale (70) qui s'étend sous ledit dégagement (68) jusqu'à la paroi inclinée formant le bord inférieur de la paroi latérale (58) correspondante.

6. Ensemble d'essuyage selon l'une des revendications précédentes, **caractérisé en ce que** le carénage (55) du bras d'entraînement présente différentes épaisseurs, de sorte qu'une zone arrière de réception (64), de moindre épaisseur, et une zone avant de transfert d'effort (66), de plus forte épaisseur, sont séparées par des lignes de jonction (72) formant épaulement en regard l'une de l'autre.

7. Ensemble d'essuyage selon la revendication 6, **caractérisé en ce que** chaque ligne de jonction (72) présente un profil spécifique dans lequel une portée cylindrique (74) forme partie desdits moyens de pivotement, et dans lequel une portion droite (80) s'étendant au droit de la portée cylindrique forme partie des moyens de maintien en position.

8. Ensemble d'essuyage selon la revendication 7, **caractérisé en ce que** les moyens complémentaires portés par la tête de montage (2) pour former lesdits moyens de pivotement consistent en des portions de cylindre (16) disposées latéralement de part et d'autre de la tête pour être logées respectivement dans une des portées cylindriques (74).

9. Ensemble d'essuyage selon la revendication 7 ou 8, **caractérisé en ce que** la portée cylindrique (74) présente des parois droites de guidage (76), en regard l'une de l'autre, et une paroi de butée circulaire (78) qui les raccordent en formant un demi-cercle ouvert vers la zone arrière de réception de la tête.

10. Ensemble d'essuyage selon l'une des revendications précédentes, **caractérisé en ce que** les moyens élastiques de rappel consistent en un ressort hélicoïdal (90) monté à une première extrémité sur la tête de montage (2) et dont la deuxième extrémité est montée sur le bras d'entraînement (4).

11. Ensemble d'essuyage selon la revendication 10, **caractérisé en ce que** les spires d'extrémité du ressort hélicoïdal (90) sont prolongées parallèlement à la ligne d'action du ressort par une branche (94) à l'extrémité libre de laquelle des moyens de fixation (96) sont formés pour l'accrochage à la tête de montage et au bras, lesdites branches étant droites.

12. Ensemble d'essuyage selon la revendication 10 ou 11, **caractérisé en ce que** la tête de montage (2) comporte une base (6) percée d'un alésage (12) coopérant avec l'arbre motorisé et une patte (8) creusée axialement entre deux montants latéraux (24) pour laisser passage au ressort (90), un axe d'accrochage (32) qui s'étend en travers de la patte entre les deux montants latéraux étant prévu pour l'accrochage du ressort.

13. Ensemble d'essuyage selon la revendication 12, **caractérisé en ce qu'**une surépaisseur (38) de la face externe (36) des montants latéraux (24) de ladite patte et la face interne des parois latérales (58) du bras qui s'étendent en regard forment parties des moyens de maintien en position du bras par rapport à la tête.

14. Ensemble d'essuyage selon l'une des revendications précédentes, **caractérisé en ce que** le carénage (55) du bras et la tête de montage (2) portent des moyens complémentaires de maintien en position spécifique pour le débrayage du bras, lesdits moyens comportant notamment une rampe (82) venue de matière avec la face interne du bras et des moyens de guidage (30) portés par la tête de montage.

15. Ensemble d'essuyage selon la revendication 14, **caractérisé en ce que** ladite rampe (82) présente deux plans d'inclinaisons différentes, un premier plan incliné (84), présentant une première valeur d'inclinaison, étant formé depuis le bord supérieur du bras (52), et un deuxième plan incliné (86), présentant une deuxième valeur d'inclinaison moins importante que la première valeur d'inclinaison, prolongeant le premier plan incliné.

16. Ensemble d'essuyage selon la revendication 1, **caractérisé en ce que** la tête de montage (2) et le bras de raccordement (4) sont agencés dans une position dite de fonctionnement de telle sorte que l'axe transversal de la tête de montage et l'axe longitudinal du bras sont sensiblement perpendiculaires.

17. Ensemble d'essuyage selon la revendication 16, **caractérisé en ce que** le bras d'entraînement (4) est apte à prendre une position de débrayage stable dans laquelle l'axe longitudinal du bras est décalé angulairement d'un angle inférieur ou égal à 30° par rapport à l'axe transversal de la tête de montage (2).
